# EUROPÄISCHE PATENTSCHRIFT

(11) **EP 3 652 045 B1**
(45) Veröffentlichungstag und Bekanntmachung des Hinweises auf die Patenterteilung: **18.08.2021**
(21) Anmeldenummer: 18742434.6
(22) Anmeldetag: 11.07.2018
(51) Int. Cl.: B62D 15/02

(54) **LENKVORRICHTUNG FÜR EIN FAHRZEUG**
STEERING DEVICE FOR A VEHICLE
DISPOSITIF DE DIRECTION D'UN VÉHICULE

(30) Priorität: 13.07.2017 DE 102017212036
(43) Veröffentlichungstag der Anmeldung: 20.05.2020
(73) Patentinhaber: Audi AG, 85045 Ingolstadt (DE); ThyssenKrupp Presta AG, 9492 Eschen (LI)
(72) Erfinder: LOOS, Sebastian, 85049 Ingolstadt (DE); KREUTZ, Daniel, 6800 Feldkirch (AT); SCHACHT, Arne, 6800 Feldkirch (AT)
(74) Vertreter: Lenzing Gerber Stute
(86) Internationale Anmeldenummer: PCT/EP2018/068789
(87) Internationale Veröffentlichungsnummer: WO 2019/011985

(56) Entgegenhaltungen:
- EP-A2- 0 970 875
- EP-A2- 2 460 712
- DE-A1-102014 018 395
- DE-A1-102015 004 745

## Beschreibung

Die Erfindung betrifft eine Lenkvorrichtung für ein zweispuriges Fahrzeug nach dem Oberbegriff des Patentanspruches 1 sowie ein Verfahren zum Betreiben eines solchen Fahrzeugs nach dem Patentanspruch 7.

Moderne Fahrerassistenzsysteme versetzen das Fahrzeug in die Lage, seine Umgebung wahrzunehmen und zu interpretieren, gefährliche Situationen zu erkennen und den Fahrer bei seinen Fahrmanövern zu unterstützen bzw. automatische Fahrmanöver durchzuführen, um Fahrzeugkollisionen zu vermeiden.

Aus der DE 2009 046 375 A1 ist eine gattungsgemäße Lenkvorrichtung für ein zweispuriges Fahrzeug bekannt. Diese weist eine Lenkhandhabe auf, bei deren Drehbetätigung die lenkbaren Fahrzeugräder aus ihrer Geradeausfahrt-Stellung um einen Radlenkwinkel einschlagbar sind. Zudem weist die Lenkvorrichtung ein Steuergerät auf, mit dem in Abhängigkeit von Fahrbetriebsparametern sowie unabhängig von der Lenkhandhabe ein Lenkaktor zur fahrerunabhängigen Einstellung des Radlenkwinkels elektrisch ansteuerbar ist. Bei Vorliegen einer Kollisionsgefahr kann das elektronische Steuergerät ein automatisches Notausweichmanöver ausführen, bei dem das Steuergerät den Lenkaktor so ansteuert, dass das Fahrzeug seine Fahrspur kurzzeitig verlässt und anschließend optional wieder in seine Fahrspur zurückkehrt, um zum Beispiel einem Kollisionsobjekt auszuweichen. Bei einem solchen automatischen Notausweichmanöver muss die Lenkung in einem hochdynamischen Vorgang große Lenkwinkel mit hohen Gradienten einstellen. Aufgrund der mechanischen Verbindung zwischen dem Lenkrad und den lenkbaren Fahrzeugrädern wird auch das Lenkrad mit großem Drehwinkel sowie mit hoher Dynamik mitgedreht.

Um das Lenkrad während des Notausweichmanövers von der Lenkung zu entkoppeln, ist in der DE 2009 046 375 A1 eine Kupplung in der mechanischen Verbindung zwischen der Lenkhandhabe und den Fahrzeugrädern zwischengeschaltet, die während des Notausweichmanövers geöffnet ist.

Eine solche Entkopplung führt dazu, dass das Lenkrad vom Fahrer ohne Kraftaufwand frei drehbar ist, was zu Irritationen des Fahrers führen kann und außerdem ein Schließen der Kupplung nach erfolgtem Notausweichmanöver erschweren kann.

Aus der DE 10 2014 016 017 A1 ist eine Fahrzeug-Lenkvorrichtung mit einer Lenkradhemmung bekannt, mit der eine Lenkrad-Drehbetätigung gehemmt oder blockiert ist, und zwar in einem Fehlerfall oder bei abgestelltem Fahrzeug. Aus der DE 10 2010 053 156 A1 ist ein gattungsgemäßes Lenksystem und Verfahren zum Betreiben eines Kraftwagens sowie ein Kraftwagen mit einer Umwelterfassungseinrichtung bekannt.

Die Offenlegungsschrift EP 0 970 875 A2 offenbart ein Lenksystem mit einem Kollisionsverhinderungsmittel, das einen eine Kollision zwischen dem Kraftfahrzeug und einem Hindernis ermöglichenden Lenkwinkel ermittelt und das Einstellen eines mit einem Kollisionswinkel übereinstimmenden Soll-Lenkwinkels erschwert oder verhindert. Dafür können Gegenlenkmittel vorgesehen sein, mit denen die vom Fahrer betätigbare Lenkhandhabe mit einer Gegenlenkkraft beaufschlagbar ist. Die Gegenlenkmittel können eine Bremse und/oder einen Elektromotor aufweisen. Die Gegenlenkkraft verhindert, dass das Fahrzeug auf Kollisionskurs gebracht wird.

Die Aufgabe der Erfindung besteht darin, eine Lenkvorrichtung für ein Fahrzeug bereitzustellen, bei der ein automatisches Ausweichmanöver einwandfrei sowie ohne Irritation auf Seiten des Fahrers durchführbar ist.

Die Aufgabe ist durch die Merkmale des Patentanspruches 1 oder 7 gelöst. Bevorzugte Weiterbildungen der Erfindung sind in den Unteransprüchen offenbart.

Die Erfindung beruht auf dem Sachverhalt, dass im obigen Stand der Technik das Lenkrad während eines automatischen Notausweichmanövers frei drehbar ist. In Abkehr dazu ist gemäß dem Kennzeichnungsteil des Anspruches 1 der Lenkhandhabe eine von dem Steuergerät elektrisch ansteuerbare Bremse zugeordnet. Das Steuergerät kann während des Notausweichmanövers die Bremse so ansteuern, dass die Lenkhandhabe in ihrer Entkopplungs-Drehposition zum Entkopplungszeitpunkt festgesetzt wird und daher während des Notausweichmanövers stillsteht. Auf diese Weise kann eine Irritation des Fahrers vermieden werden und wird auch ein lagerichtiges Wiedereinkoppeln der Lenkhandhabe nach erfolgtem Notausweichmanöver vereinfacht. Erfindungsgemäß wird daher das Notausweichsystem für den Fahrer komfortabler und sicherer gestaltet, wobei das Lenkrad-Verhalten während des Notausweichmanövers vom Fahrer nicht als störend empfunden wird.

Wie oben angegeben, bleibt somit während des Notausweichmanövers die Lenkhandhabe zumindest bei einer Nicht-Drehbetätigung durch den Fahrer in der Entkopplungs-Drehposition. Bevorzugt wird die Bremse während des Notausweichmanövers so vom Steuergerät angesteuert, dass ein Bremsmoment erzeugt wird, mit dessen Hilfe eine aktive fahrerseitige Lenkbetätigung der Lenkerhandhabe aus der Entkopplungs-Drehposition heraus vollständig blockiert wird oder zumindest gehemmt wird.

Zur Erzielung einer solchen Lenkhandhabe-Hemmung kann das von der Bremse erzeugte Bremsmoment so bemessen sein, dass der Fahrer unter Überwindung des Bremsmomentes eine manuelle Drehbetätigung der Lenkhandhabe aus ihrer Entkopplungs-Drehposition vornehmen kann. Bevorzugt ist das von der Bremse erzeugte Bremsmoment dabei veränderlich, so dass dem Fahrer ein Lenken der Lenkhandhabe ermöglicht wird. Beispielhaft kann die Größe des von der Bremse erzeugten Bremsmomentes vom Drehsinn der Lenkhandhabe-Drehbetätigung abhängen. So kann die Größe des Bremsmomentes bei einer im Uhrzeigersinn ausgeführten Lenkhandhabe-Drehbetätigung unterschiedlich zur Größe des Bremsmomentes bei einer im Gegenuhrzeigersinn ausgeführten Lenkhandhabe-Drehbetätigung sein.

Im Hinblick auf einen einwandfreien Ablauf des Notausweichmanövers ist es besonders bevorzugt, wenn bei einer in einem Drehsinn vorgenommenen Lenkhandhabe-Drehbetätigung aus der Entkopplungs-Drehposition heraus (das heißt einem Weglenken), das von der Bremse erzeugte Bremsmoment größer ist als das Bremsmoment bei einem Zurücklenken, das heißt bei einer im Gegendrehsinn vorgenommenen Lenkhandhabe-Drehbetätigung zurück in die Entkopplungs-Drehposition.

In einer bevorzugten Weiterentwicklung kann das Fahrzeug zusätzlich auch in einem autonomen Fahrbetrieb fahren. Auch in diesem Fall kann das Steuergerät die Kupplung zwischen der Lenkhandhabe und den lenkbaren Fahrzeugrädern vollständig lösen sowie die Bremse so ansteuern, dass die Lenkhandhabe während des autonomen Fahrbetriebes stillsteht. Dieser wird somit unabhängig vom Fahrer alleine durch das Steuergerät sowie den davon angesteuerten Lenkaktor durchgeführt.

Nachfolgend ist ein Ausführungsbeispiel der Erfindung anhand der beigefügten Figuren beschrieben.

Es zeigen:
- Figur 1: in einer grob schematischen Teilansicht den Vorderwagenbereich eines zweispurigen Kraftfahrzeugs mit angedeuteter Lenkvorrichtung; und
- Figur 2: eine Ansicht, die ein Notausweichmanöver des Fahrzeugs veranschaulicht.

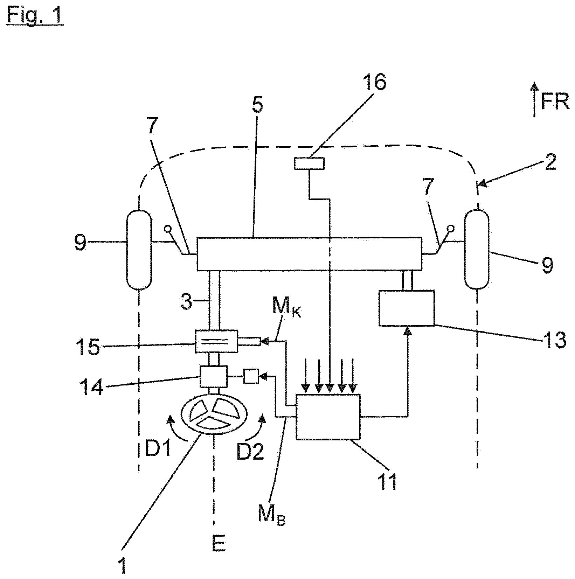

In der Figur 1 ist grob schematisch eine Lenkvorrichtung für ein zweispuriges Fahrzeug gezeigt, die eine Lenkhandhabe 1 aufweist, die über eine mehrteilige Lenksäule 3 in trieblicher (d.h. mechanischer) Verbindung mit einer in einem Lenkgetriebe 5 angeordneten (nicht gezeigten) Zahnstange ist. Diese ist in der Fahrzeugquerrichtung y ausgerichtet und kann durch eine Drehbetätigung der Lenkhandhabe 1 in der Fahrzeugquerrichtung y verstellt werden. Die im Lenkgetriebe 5 angeordnete Zahnstange ist beidseitig mit Spurstangen 7 verlängert, die an nicht dargestellten Radträgern der beiden lenkbaren Vorderräder 9 angelenkt sind. Bei einer Drehbetätigung der Lenkhandhabe 1 werden somit die Vorderräder 9 um einen damit korrelierenden Radlenkwinkel eingeschlagen.

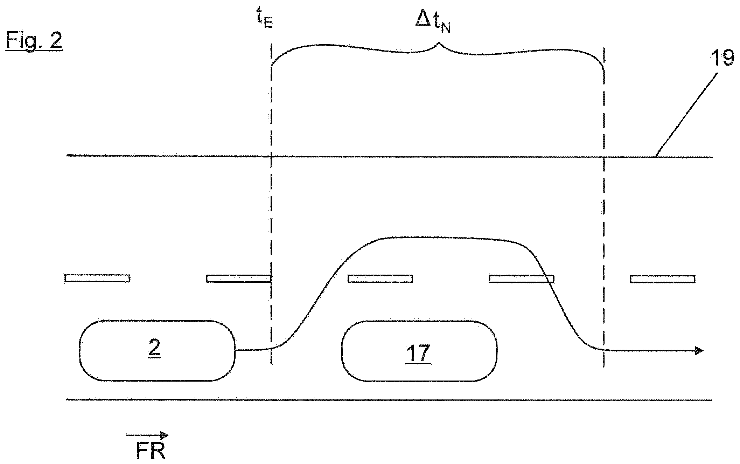

Die in der Figur 1 gezeigte Lenkvorrichtung weist zudem ein Steuergerät 11 auf, mit dem in bestimmten Fahrsituationen ein fahrerunabhängiger Radlenkwinkel erzeugbar ist. Hierzu ist das Steuergerät 11 ausgangsseitig in Signalverbindung mit einem Lenkaktor 13, mit einer Kupplung 15 und mit einer Bremse 14, mit der ein Bremsmoment erzeugbar ist, um eine Drehbetätigung der Lenkhandhabe 1 zu hemmen. Das Steuergerät 11 ist eingangsseitig unter anderem mit einer Umfeldsensorik 17 verbunden, mittels der im Fahrbetrieb zum Beispiel ein potentielles Kollisionsobjekt 17 (Figur 2) im Umfeld des Kraftfahrzeugs erfasst werden kann. Bei Erfassung eines solchen Objektes 17 wird in dem Steuergerät 11 auf der Grundlage der Sensordaten ausgewertet, ob eine Kollisionsgefahr vorliegt. Bei Vorliegen einer solchen Kollisionsgefahr kann das Steuergerät 11 ggf. ein automatisches Notausweichmanöver Δt_{N} (Fig. 2) ausführen, um dem Kollisionsobjekt 17 auszuweichen. Ein solches Notausweichmanöver Δt_{N} ist ein hochdynamischer Vorgang, der beispielhaft 0,5 bis 1 s andauert.

Zur Erzeugung des oben erwähnten fahrerunabhängigen Radlenkwinkels kann das Steuergerät 11 in Abhängigkeit von Fahrbetriebsparametern (z.B. Fahrzeuggeschwindigkeit, Fahrzeugquerbeschleunigung, etc.) sowie unabhängig von der Lenkhandhabe 1 den Lenkaktor 13 ansteuern, der in trieblicher Verbindung mit der Zahnstange des Lenkgetriebes 5 ist, um den Radlenkwinkel der Vorderräder 9 fahrerunabhängig einzustellen. In diesem Fall wird gleichzeitig die in der mehrteiligen Lenksäule 3 zwischengeschaltete Kupplung 15 vollständig geöffnet, um eine mechanische Lenkverbindung zwischen der Lenkhandhabe 1 und den beiden Vorderrädern 9 zu lösen.

Im normalen Fahrbetrieb wird in der Kupplung 15 ein Kupplungsmoment M_{K} erzeugt, um eine mechanische Lenkverbindung sowie eine fahrerabhängige Lenkung zu gewährleisten. Zudem wirkt der Lenkaktor 13 im normalen Fahrbetrieb zur Lenkhandhaben- Unterstützung als eine Servoeinheit.

Nachfolgend wird anhand der Figur 2 eine Fahrsituation beschrieben, in der sich das Fahrzeug 1 in der Fahrtrichtung FR in Geradeausfahrt auf einer Fahrbahn 19 einem stehenden potentiellen Kollisionsobjekt 17 nähert. In diesem Fall wird das Kollisionsobjekt 17 von der Umfeldsensorik 16 des Fahrzeugs 2 erfasst, das entsprechende Sensordaten zu dem Steuergerät 11 weiterleitet. Wird das Vorliegen einer Kollisionsgefahr ermittelt, so führt das Steuergerät 11 ein automatisches Notausweichmanöver Δt_{N} durch, bei dem zunächst zu einem Entkopplungszeitpunkt t_{E} das Steuergerät 11 die Kupplung 15 zwischen der Lenkhandhabe 1 und den lenkbaren Fahrzeugrädern 9 vollständig löst. Zudem steuert das Steuergerät 11 den Lenkaktor 13 so an, dass das Fahrzeug 2 seine Fahrspur kurzzeitig verlässt, dem Kollisionsobjekt 17 ausweicht und optional anschließend wieder in seine Fahrspur zurückkehrt. Sobald das Fahrzeug 2 wieder in seine Fahrspur verbracht ist, endet das automatische Notausweichmanöver Δt_{N}. Zu diesem Zeitpunkt endet der Notausweich-Eingriff des Lenkaktors 13 und wird die Kupplung 15 wieder geschlossen, um einen fahrerseitigen Lenkeingriff zu ermöglichen.

Während des Notausweichmanövers Δt_{N} wird die Bremse 14 vom Steuergerät 11 so aktiviert, dass die Lenkhandhabe 1 in ihrer Drehposition E (nachfolgend Entkopplungs-Drehposition) zum Entkopplungszeitpunkt t_{E} stillsteht. In der Figur 1 und 2 entspricht die Entkopplungs-Drehposition E der Lenkhandhabe 1 einer nicht eingeschlagenen Vorderrad-Stellung in der Geradeausfahrt. Für die Lenkhandhaben-Hemmung erzeugt die Bremse 14 ein Bremsmoment M_{B}, die einer vom Fahrer vorgenommenen Lenkbetätigung entgegenwirkt. Das von der Bremse 14 erzeugte Bremsmoment M_{B} ist dabei so bemessen, dass der Fahrer unter Überwindung des Bremsmomentes M_{B} eine manuelle Drehbetätigung der Lenkhandhabe 1 aus der Entkopplungs-Drehposition E vornehmen kann.

Bei einer solchen fahrerseitig während des Notausweichmanövers Δt_{N} durchgeführten Lenkbetätigung ist jedoch das beaufschlagte Bremsmoment M_{B} nicht konstant, sondern hängt die Größe des Bremsmomentes M_{B} vielmehr vom Drehsinn der fahrerseitigen Lenkhandhabe-Drehbetätigung ab: So ist bei einem Weglenken (z.B. in einem Uhrzeigersinn D1) aus der Entkopplungs-Drehposition E heraus das von der Bremse 14 erzeugte Bremsmoment M_{B} größer als das Bremsmoment M_{B} bei einem Zurücklenken, (im Gegenuhrzeigersinn D2) zurück in die Entkopplungs-Drehposition E. Auf diese Weise erhält der Fahrer eine haptische Rückmeldung, die eine Drehbetätigung der Lenkhandhabe 1 in Richtung auf die Entkopplungs-Drehposition E unterstützt. Dadurch ist zum Zeitpunkt der Beendigung des Notausweichmanövers Δt_{N} gewährleistet, dass sich die Lenkhandhabe 1 lagerichtig in ihrer Geradeausfahrt-Stellung befindet und die Kupplung 15 wieder einwandfrei schließen kann.

## Patentansprüche

1. Lenkvorrichtung für ein zweispuriges Fahrzeug, mit einer Lenkhandhabe (1), bei deren Drehbetätigung (D1, D2) die lenkbaren Fahrzeugräder (9) um einen Radlenkwinkel einschlagbar sind, und mit einem Steuergerät (11), mit dem in Abhängigkeit von Fahrbetriebsparametern sowie unabhängig von der Lenkhandhabe (1) ein Lenkaktor (13) zur Einstellung des Radlenkwinkels elektrisch ansteuerbar ist sowie eine Kupplung (15) elektrisch ansteuerbar ist, mit der eine mechanische Lenkverbindung (3) zwischen der Lenkhandhabe (1) und den lenkbaren Fahrzeugrädern (9) kuppelbar oder lösbar ist, wobei das Steuergerät (11) bei Vorliegen einer Kollisionsgefahr ein automatisches Ausweichmanöver (Δt_{N}) ausführt, bei dem zu einem Entkopplungszeitpunkt (t_{E}) das Steuergerät (11) die Kupplung (15) zwischen der Lenkhandhabe (1) und den lenkbaren Fahrzeugrädern (9) vollständig löst und das Steuergerät (11) den Lenkaktor (13) so ansteuert, dass das Fahrzeug (2) seine Fahrspur kurzzeitig verlässt und optional anschließend wieder zurück in die Fahrspur verbracht wird, **dadurch gekennzeichnet, dass** der Lenkhandhabe (1) eine von dem Steuergerät (11) elektrisch ansteuerbare Bremse (14) zugeordnet ist, und dass das Steuergerät (11) während des Notausweichmanövers (Δt_{N}) die Bremse (14) so ansteuert, dass die Lenkhandhabe (1) in ihrer Drehposition (E) zum Entkopplungszeitpunkt (t_{E}) während des Notausweichmanövers (Δt_{N}) stillsteht.

2. Lenkvorrichtung nach Anspruch 1, **dadurch gekennzeichnet, dass** eine Lenkbetätigung der Lenkhandhabe (1) während des Notausweichmanövers (Δt_{N}) aus ihrer Drehposition (E) zum Entkopplungszeitpunkt (t_{E}) mittels eines von der Bremse (14) erzeugten Bremsmoments (M_{B}) blockiert oder gehemmt ist.

3. Lenkvorrichtung nach Anspruch 1, **dadurch gekennzeichnet, dass** das von der Bremse (14) erzeugte Bremsmoment (M_{B}) so bemessen ist, dass der Fahrer unter Überwindung des Bremsmoments (M_{B}) eine manuelle Drehbetätigung (D1, D2) der Lenkhandhabe (1) aus ihrer Drehposition (E) zum Entkopplungszeitpunkt (t_{E}) vornehmen kann.

4. Lenkvorrichtung nach Anspruch 3, **dadurch gekennzeichnet, dass** die Größe des von der Bremse (14) erzeugten Bremsmoments (M_{B}) vom Drehsinn (D1, D2) der Lenkhandhabe-Drehbetätigung abhängt, das heißt die Größe des Bremsmoments (M_{B}) bei einer im Uhrzeigersinn (D1) ausgeführten Lenkhandhabe-Drehbetätigung ist unterschiedlich zur Größe des Bremsmoments (M_{B}) bei einer im Gegenuhrzeigersinn (D2) ausgeführten Lenkhandhabe-Drehbetätigung.

5. Lenkvorrichtung nach Anspruch 4, **dadurch gekennzeichnet, dass** bei einem Weglenken, d.h. bei einer in einem Drehsinn (D1) vorgenommenen Lenkhandhabe-Drehbetätigung aus der Drehposition (E) zum Entkopplungszeitpunkt (t_{E}) heraus, das von der Bremse (14) erzeugte Bremsmoment (M_{B}) größer ist als das Bremsmoment (M_{B}) bei einem Zurücklenken, das heißt bei einer im Gegendrehsinn (D2) vorgenommenen Lenkhandhabe-Drehbetätigung zurück in die Entkopplungs-Drehposition (E).

6. Lenkvorrichtung nach einem der vorhergehenden Ansprüche, **dadurch gekennzeichnet, dass** das Fahrzeug ein autonom fahrendes Fahrzeug ist, und dass in einem autonomen Fahrbetrieb das Steuergerät (11) die Kupplung (15) zwischen der Lenkhandhabe (1) und den lenkbaren Fahrzeugräder (9) vollständig löst und die Bremse (14) so ansteuert, dass die Lenkhandhabe (1) stillsteht, während die Fahrzeuglenkung unabhängig vom Fahrer mit Hilfe des Steuergeräts (11) automatisch erfolgt.

7. Verfahren zum Betreiben eines Fahrzeugs (1) mit einer Lenkvorrichtung nach einem der vorhergehenden Ansprüche.

## Claims

1. Steering device for a two-track vehicle, having a steering handle (1), during the rotary actuation (D1, D2) of which the steerable vehicle wheels (9) can be turned by a wheel steering angle, and having a control unit (11), by means of which a steering actuator (13) for setting the wheel steering angle can be electrically actuated as a function of driving operation parameters and independently of the steering handle (1), and a clutch (15) can be electrically actuated, with which a mechanical steering connection (3) between the steering handle (1) and the steerable vehicle wheels (9) can be coupled or released, wherein the control unit (11) executes an automatic evasive maneuver (Δt_{N}) in the presence of a risk of collision, in which, at a decoupling time (t_{E}), the control unit (11) completely disengages the clutch (15) between the steering handle (1) and the steerable vehicle wheels (9), and the control unit (11) actuates the steering actuator (13) in such a way that the vehicle (2) briefly leaves its lane and is optionally subsequently brought back into the lane, **characterized in that** the steering handle (1) is assigned a brake (14) which can be electrically actuated by the control unit (11), and **in that** the control unit (11) actuates the brake (14) during the emergency escape maneuver (Δt_{N}) in such a way that the steering handle (1) is stationary in its rotational position (E) at the decoupling time (t_{E}) during the emergency escape maneuver (Δt_{N}).

2. Steering device according to claim 1, **characterized in that** a steering actuation of the steering handle (1) during the emergency escape maneuver (Δt_{N}) from its rotational position (E) at the decoupling time (t_{E}) is blocked or inhibited by means of a braking torque (M_{B}) generated by the brake (14).

3. Steering device according to claim 1, **characterized in that** the braking torque (M_{B}) generated by the brake (14) is dimensioned in such a way that the driver can carry out a manual rotary actuation (D1, D2) of the steering handle (1) from its rotary position (E) at the decoupling time (t_{E}) while overcoming the braking torque (M_{B}).

4. Steering device according to claim 3, **characterized in that** the magnitude of the braking torque (M_{B}) generated by the brake (14) depends on the direction of rotation (D1, D2) of the steering handle rotary actuation, i.e. the magnitude of the braking torque (M_{B}) in the case of a steering handle rotary actuation executed clockwise (D1) is different from the magnitude of the braking torque (M_{B}) in the case of a steering handle rotary actuation executed counterclockwise (D2).

5. Steering device according to claim 4, **characterized in that** in the case of steering away, i.e. in the case of a steering handle rotary actuation carried out in one direction of rotation (D1) from the rotary position (E) at the decoupling time (t_{E}), the braking torque (M_{B}) generated by the brake (14) is greater than the braking torque (M_{B}) in the case of steering backwards, i.e. in the case of a steering handle rotary actuation carried out in the opposite direction of rotation (D2) back into the decoupling rotary position (E).

6. Steering device according to one of the preceding claims, **characterized in that** the vehicle is an autonomously driving vehicle, and **in that** in an autonomous driving mode the control unit (11) completely disengages the clutch (15) between the steering handle (1) and the steerable vehicle wheels (9) and controls the brake (14) in such a way that the steering handle (1) is stationary, while the vehicle steering is performed automatically independently of the driver with the aid of the control unit (11).

7. Method for operating a vehicle (1) with a steering device according to any of the preceding claims.

## Revendications

1. Dispositif de direction pour un véhicule à deux voies, avec une poignée de direction (1), lors de l'actionnement rotatif (D1, D2) de laquelle les roues directrices (9) du véhicule peuvent être tournées d'un angle de braquage des roues, et avec une unité de commande (11), au moyen de laquelle un actionneur de direction (13) pour le réglage de l'angle de braquage des roues peut être actionné électriquement en fonction de paramètres de conduite et indépendamment de la poignée de direction (1), et un embrayage (15) peut être actionné électriquement, avec lequel une liaison de direction mécanique (3) entre la poignée de direction (1) et les roues directrices du véhicule (9) peut être couplée ou libérée, l'unité de commande (11) exécutant une manœuvre d'évitement automatique (Δt_{N}) en présence d'un risque de collision, dans laquelle, à un moment de découplage (t_{E}), l'unité de commande (11) débraye complètement l'embrayage (15) entre la poignée de direction (1) et les roues directrices (9) du véhicule, et l'unité de commande (11) actionne l'actionneur de direction (13) de telle sorte que le véhicule (2) quitte brièvement sa voie et est éventuellement ramené ensuite dans la voie, **caractérisé en ce qu'**un frein (14) pouvant être actionné électriquement par l'unité de commande (11) est associé à la poignée de direction (1), et **en ce que** l'unité de commande (11) actionne le frein (14) pendant la manoeuvre d'évitement d'urgence (Δt_{N}) de telle sorte que la poignée de direction (1) soit immobile dans sa position de rotation (E) au moment du découplage (t_{E}) pendant la manoeuvre d'évitement d'urgence (Δt_{N}).

2. Dispositif de direction selon la revendication 1, **caractérisé en ce qu'**un actionnement de direction de la poignée de direction (1) pendant la manœuvre d'évitement d'urgence (Δt_{N}) à partir de sa position de rotation (E) au moment du découplage (t_{E}) est bloqué ou inhibé au moyen d'un couple de freinage (M_{B}) généré par le frein (14).

3. Dispositif de direction selon la revendication 1, **caractérisé en ce que** le couple de freinage (M_{B}) généré par le frein (14) est dimensionné de telle sorte que le conducteur peut effectuer un actionnement rotatif manuel (D1, D2) de la poignée de direction (1) à partir de sa position de rotation (E) au moment du découplage (t_{E}) en surmontant le couple de freinage (M_{B}).

4. Dispositif de direction selon la revendication 3, **caractérisé en ce que** la grandeur du couple de freinage (M_{B}) généré par le frein (14) dépend du sens de rotation (D1, D2) de l'actionnement rotatif du guidon, c'est-à-dire que la grandeur du couple de freinage (M_{B}) dans le cas d'un actionnement rotatif du guidon exécuté dans le sens des aiguilles d'une montre (D1) est différente de la grandeur du couple de freinage (M_{B}) dans le cas d'un actionnement rotatif du guidon exécuté dans le sens inverse des aiguilles d'une montre (D2).

5. Dispositif de direction selon la revendication 4, **caractérisé en ce** dans le cas d'un braquage, c'est-à-dire dans le cas d'une opération de rotation de la poignée de direction effectuée dans un sens de rotation (D1) à partir de la position de braquage (E) à l'instant de découplage (t_{E}), le couple de freinage (M_{B}) généré par le frein (14) est supérieur au couple de freinage (M_{B}) en cas de braquage en retour, c'est-à-dire en cas d'actionnement rotatif de la poignée de direction effectué dans le sens inverse de rotation (D2), pour revenir dans la position de rotation de découplage (E).

6. Dispositif de direction selon l'une des revendications précédentes, **caractérisé en ce que** le véhicule est un véhicule à conduite autonome, et **en ce que** dans un mode de conduite autonome, l'unité de commande (11) débraye complètement l'embrayage (15) entre la poignée de direction (1) et les roues directrices (9) du véhicule et commande le frein (14) de telle sorte que la poignée de direction (1) est immobile, tandis que la direction du véhicule est effectuée automatiquement indépendamment du conducteur à l'aide de l'unité de commande (11).

7. Procédé de conduite d'un véhicule (1) avec un dispositif de direction selon l'une quelconque des revendications précédentes.
